# EUROPÄISCHE PATENTSCHRIFT

(11) **EP 1 875 590 B1**
(45) Veröffentlichungstag und Bekanntmachung des Hinweises auf die Patenterteilung: **30.07.2014**
(21) Anmeldenummer: 06742698.1
(22) Anmeldetag: 26.04.2006
(51) Int. Cl.: H02M 1/08

(54) **PHASENANSCHNITTSTEUERUNG**
PHASE CONTROL
COMMANDE A PHASES

(30) Priorität: 27.04.2005 DE 102005020414
(43) Veröffentlichungstag der Anmeldung: 09.01.2008
(73) Patentinhaber: Kurz, Gerhard, 75378 Bad-Liebenzell-Monakam (DE)
(72) Erfinder: SCHULZ, Detlef, 72657 Altenriet (DE)
(74) Vertreter: Witte, Weller & Partner Patentanwälte mbB
(86) Internationale Anmeldenummer: PCT/EP2006/003867
(87) Internationale Veröffentlichungsnummer: WO 2006/114295

(56) Entgegenhaltungen:
- EP-A1- 0 213 234
- DE-A1- 1 523 332
- DE-A1- 2 736 746
- DE-A1- 3 640 257
- GB-A- 1 300 999
- GB-A- 1 483 896
- GB-A- 2 206 249
- US-A- 5 030 890

## Beschreibung

Die vorliegende Erfindung betrifft eine Vorrichtung zur Leistungssteuerung von an ein Wechselspannungs-Versorgungsnetz angeschlossenen elektrischen Verbrauchern mit einem in Reihe mit dem Verbraucher liegenden Schaltungselement (TRIAC), das einen Steuereingang aufweist; einer Zündeinrichtung zur Ansteuerung des Schaltungselements und Ausführung eines Phasenanschnitts, und einem Zündkondensator, der mit der Zündeinrichtung gekoppelt ist und die zum Aktivieren des Schaltungselements erforderliche Energie liefert. Die Erfindung betrifft darüber hinaus ein Verfahren zur Leistungssteuerung mittels Phasenanschnitt von an ein Wechselspannungs-Versorgungsnetz angeschlossenen elektrischen Verbrauchern.

Eine Vorrichtung und ein Verfahren der vorgenannten Art sind beispielsweise aus der Anmeldung GB 2206249 A, EP 0 213 234 A, GB 1 483 896 A, US 5,030,890 A, DE 27 36 746 A1 DE 198 50 905 A1 oder DE 101 27 777 C1 bekannt. Allgemein sind derartige Vorrichtungen als sogenannte Phasenanschnittsteuerungen bekannt. Sie dienen dazu, die einem elektrischen Verbraucher zugeführte Leistung zu steuern, indem der Verbraucher über ein Schaltungselement periodisch ein- und ausgeschaltet wird. Üblicherweise wird als Schaltungselement ein TRIAC eingesetzt, das in Reihe mit dem Verbraucher liegt und über eine Steuereinrichtung gezündet wird. Die Steuereinrichtung umfasst eine Reihenschaltung aus einem Widerstand und einem Zündkondensator, die parallel zu dem TRIAC angeordnet ist. Das Zündsignal wird zwischen dem Widerstand und dem Zündkondensator abgegriffen und über eine Reihenschaltung aus einem Widerstand und einem als DIAC ausgebildeten Zündelement, dem Steuereingang (Gate) des TRIACS zugeführt.

Im Betrieb wird der Kondensator durch die der Phasenanschnittsteuerung zugeführte Wechselspannung über den Widerstand aufgeladen, so dass die Spannung am Kondensator (Zündkondensator) steigt. Sobald ein bestimmter Spannungswert (Zündspannung) erreicht ist, schaltet der DIAC durch und zündet den TRIAC, so dass der Verbraucher eingeschaltet wird. Der TRIAC bleibt bis zum nächsten Nulldurchgang der Spannung in seinem leitenden Zustand. Dieser Vorgang wiederholt sich periodisch für jede Halbwelle der Wechselspannung.

Die Leistungssteuerung erfolgt nun beispielsweise dadurch, dass der Widerstandswert des in Reihe zu dem Zündkondensator liegenden Widerstands verändert wird. Damit lässt sich die Ladezeit zum Erreichen der notwendigen Zündspannung verändern, mit dem Ergebnis, dass auch die Zeitdauer, während der der TRIAC leitend ist, verändert wird.

Die zum Zünden des TRIACS erforderliche Zündenergie wird vom Zündkondensator geliefert, der üblicherweise auf ca. 32 +/-4 V aufgeladen wird. Bei dieser Spannung wird der DIAC leitend, so dass die im Zündkondensator gespeicherte Energie zum TRIAC fließen kann. Allerdings sperrt der DIAC bei Sinken der Zündspannung um ca. 10 V wieder, so dass die noch im Zündkondensator gespeicherte Energie nicht weiter genutzt werden kann. Aufgrund dieser Eigenschaft ist es erforderlich, dass der Kondensator eine Kapazität von mindestens 100 nF besitzt, so dass der geringe Energieanteil der gesamten im Zündkondensator gespeicherten Energie während der Leitendphase des DIACS ausreicht, der TRIAC zu zünden.

Die Verwendung einer Kapazität von üblicherweise 100 nF führt zu einem relativ großen Kondensator, der zudem nur über einen Widerstand mit hoher Leistung (üblicherweise ein 3 W Widerstand) aufgeladen werden kann. Auch dieses Bauteil ist groß und teuer.

Vor diesem Hintergrund besteht die Aufgabe der vorliegenden Erfindung unter anderem darin, eine Vorrichtung und ein Verfahren zur Leistungssteuerung der vorgenannten Art so weiterzubilden, dass die Vorrichtung kostengünstiger hergestellt werden kann und exakter funktioniert als die bisherigen Lösungen.

Diese Aufgabe wird von einer Vorrichtung gelöst, wie sie in Anspruch 1 definiert ist. Die Zündeinrichtung weist dabei folgende Merkmale auf::
ein Schaltelement, das bei dessen Aktivierung eine Verbindung zwischen Zündkondensator und Steuereingang des Schaltungselements herstellt; ein Freigabeelement, das die am Zündkondensator anliegende Spannung mit einem Referenzwert vergleicht und bei Erreichen des Referenzwertes ein Freigabesignal erzeugt, wobei der Referenzwert dem Wert der Zündspannung entspricht, und ein Zeitelement, das mit dem Freigabeelement verbunden ist und in Antwort auf das Freigabesignal und nach Ablauf einer vorgebbaren Zeitdauer das Schaltelement aktiviert, derart, dass die im Zündkondensator gespeicherte Energie nahezu vollständig zum Zünden des Schaltungselements (TRIAC) verwendet wird.

D.h. mit anderen Worten, dass die Vorrichtung ein Schaltelement aufweist, das nicht als DIAC ausgebildet ist, und eine Verbindung zwischen Zündkondensator und Steuereingang des Schaltungselements (TRIACS) zum Zünden herstellt, wenn einerseits ein Freigabesignal anliegt und andererseits eine bestimmte Zeitdauer abgelaufen ist. Die Zeitdauer beginnt typischerweise mit jeder Halbwelle der Versorgungsspannung, kann jedoch auch zu einem anderen Zeitpunkt beginnen, bspw. wenn am Zündkondensator eine vorgegebene Spannung erreicht ist, die vorzugsweise im Bereich von 22 V liegt. Das Schaltelement hält solange geschlossen (d.h. es gibt eine Verbindung zwischen Zündkondensator und Steuereingang des Schaltungselements), bis der Zündkondensator nahezu vollständig entladen ist.

Einer der Vorteile dieser erfindungsgemäßen Vorrichtung ist darin zu sehen, dass nahezu die gesamte im Zündkondensator gespeicherte Energie zum Zünden des Schaltungselements, vorzugsweise eines TRIACS, verwendet werden kann. Dies ermöglicht wiederum, diesen Zündkondensator kleiner zu dimensionieren, so dass eine Kapazität von 10 nF ausreichen kann. Im Vergleich zu bisherigen Vorrichtungen ist folglich die Kapazität um einen Faktor 10 geringer. Eine weitere Folge dieser geringeren Kapazität besteht darin, dass der in Reihe mit dem Zündkondensator liegende Widerstand als kostengünstiger SMD-Widerstand ausgeführt werden kann, da die Anforderungen an die Leistung deutlich geringer sind. War bei bisherigen Lösungen der Widerstand mit 3 W Leistung ausgelegt, reichen nunmehr Widerstände mit 0,25 W Leistung.

Insgesamt lassen sich somit die Herstellungskosten um ca. 10% reduzieren.

Weitere Vorteile der erfindungsgemäßen Vorrichtung liegen beispielsweise darin, dass eine geringere einstellbare minimale Spannung erreicht werden kann und die maximale Spannung um ca. 1 V bis 2 V höher liegt. Ferner ist die thermische Stabilität der Vorrichtung wesentlich besser; es lässt sich eine Abweichung von ca. +/- 5 V bei 70 V Motorspannung von -20°C bis +120°C erreichen. Das ist etwas weniger als die Hälfte im Vergleich zu früheren Schaltungen.

Der Vorteil einer Sanftanlaufschaltung besteht darin dass der elektrische Verbraucher nach dem Start nicht gleich mit der eingestellten Leistung betrieben wird, sondern dass die Leistung bis zu dem eingestellten Wert langsam (d.h. innerhalb einiger weniger bis zu einigen hundert Perioden der Wechselspannung) ansteigt.

In einer bevorzugten Weiterbildung ist parallel zu dem Zündkondensator ein Spannungsbegrenzungselement vorgesehen, um die am Zündkondensator anliegende Spannung auf einen vorgegebenen Maximalwert zu begrenzen. Bevorzugt besteht das Spannungsbegrenzungselement aus zwei gegenpolig verschalteten Zener-Dioden.

Damit ist erreichbar, dass die am Zündkondensator anliegende Spannung innerhalb einer Halbwelle schnell ansteigt, nach Erreichen der Zener-Spannung konstant bleibt, um dann während dem Zünden wieder abzusinken. Ein solcher Spannungsverlauf hat sich in der Praxis, insbesondere auch im Hinblick auf die eingesetzten Bauelemente und deren Dimensionierung, als vorteilhaft herausgestellt.

In einer bevorzugten Weiterbildung legt die vorgebbare Zeitdauer (des Zeitelements) die Einschaltdauer (Zündwinkel) des Schaltungselements fest. Vorzugsweise weist das Zeitelement ein RC-Glied zur Erzeugung einer rampenförmigen Spannung und einen einstellbaren Widerstand zur Einstellung eines Schwellenwerts auf, wobei das Schaltelement aktiviert wird, sobald die rampenförmige Spannung den Schwellenwert erreicht hat.

Bevorzugt ist ein Spannungsvergleicher vorgesehen, dem die rampenförmige Spannung und der Schwellenwert zugeführt sind, und der einen Freigabeeingang aufweist, der mit dem Freigabeelement verbunden ist.

D.h. mit anderen Worten, dass das RC-Glied eine rampenförmig ansteigende Spannung erzeugt, die nach Erreichen des eingestellten Schwellenwerts den Ablauf der Zeitdauer signalisiert, vorausgesetzt, dass auch ein Freigabesignal anliegt. Ein entsprechendes Signal kann daraufhin zum Aktivieren des Schaltelements generiert werden.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachfolgend anhand eines Ausführungsbeispiels mit Bezug auf die Zeichnung näher erläutert. Dabei zeigen:
- Fig. 1: ein schematisches Schaltbild einer erfindungsgemäßen Vorrichtung;
- Fig. 2A: ein schematisches Blockschaltdiagramm einer in Fig. 1 verwendeten DIAC-Ersatzschaltung;
- Fig. 2B: ein schematisches Blockschaltdiagramm eines Zeitelements, das in Fig. 2A gezeigt ist;
einiger weniger bis zu einigen hundert Perioden der Wechselspannung) ansteigt.

Die der Erfindung zugrunde liegende Aufgabe wird auch von einem Verfahren zur Leistungssteuerung mittels Phasenanschnitt von an ein Wechselspannungs-Versorgungsnetz angeschlossenen elektrischen Verbrauchern gelöst, das die Schritte aufweist: Laden eines Zündkondensators bis zu einer vorgegebenen Spannung, wobei die dann im Zündkondensator gespeicherte Energie (Zündenergie) zum Zünden eines Schaltungselements ausreicht; und nach Ablauf einer einstellbaren Zeitdauer und in Antwort auf ein Freigabesignal, verbinden des Zündkondensators mit dem Schaltungselement, um dieses zu aktivieren, derart, dass nahezu die gesamte Zündenergie über das Schaltungselement abfließt, wobei das Freigabesignal erzeugt wird, wenn am Zündkondensator eine vorgegeben Spannung erreicht ist.

Dieses Verfahren besitzt die bereits im Zusammenhang mit der Vorrichtung zuvor ausgeführten Vorteile, so dass an dieser Stelle nicht nochmals darauf eingegangen werden muss.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachfolgend anhand eines Ausführungsbeispiels mit Bezug auf die Zeichnung näher erläutert. Dabei zeigen:

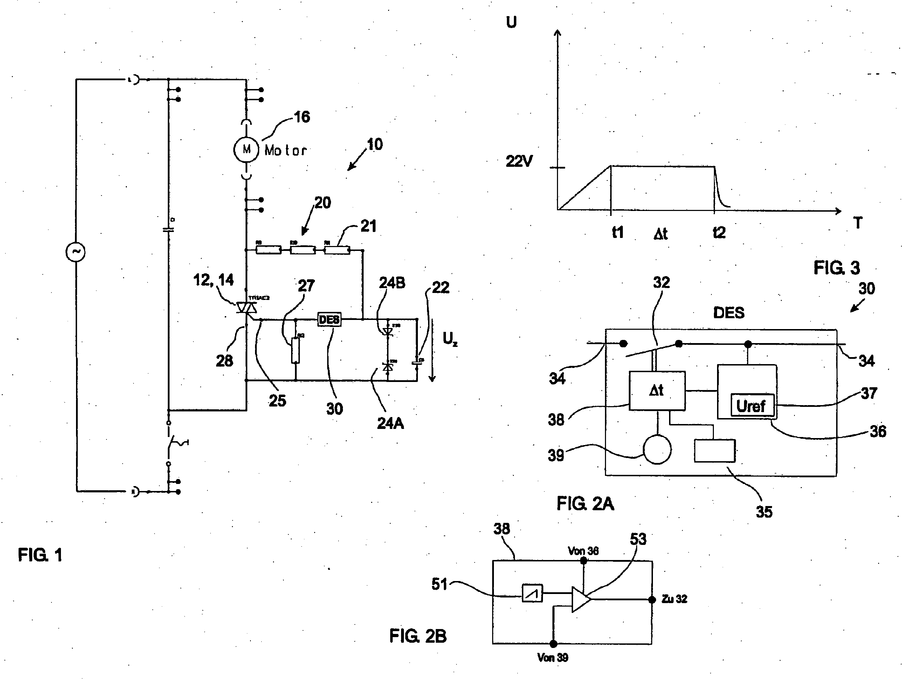

- Fig. 1: ein schematisches Schaltbild einer erfindungsgemäßen Vorrichtung;
- Fig. 2A: ein schematisches Blockschaltdiagramm einer in Fig. 1 verwendeten DIAC-Ersatzschaltung;
- Fig. 2B: ein schematisches Blockschaltdiagramm eines Zeitelements, das in Fig. 2A gezeigt ist;
- Fig. 3: ein nicht maßstäbliches Diagramm, das den Spannungsverlauf am Zündkondensator zeigt;

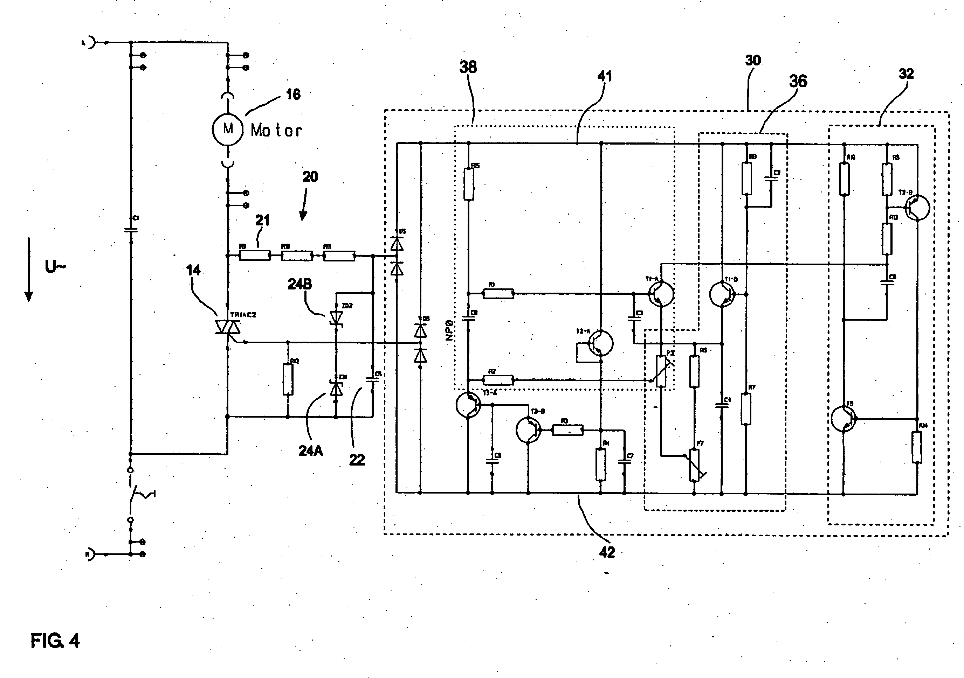

- Fig. 4: ein Schaltbild einer erfindungsgemäßen Vorrichtung; und

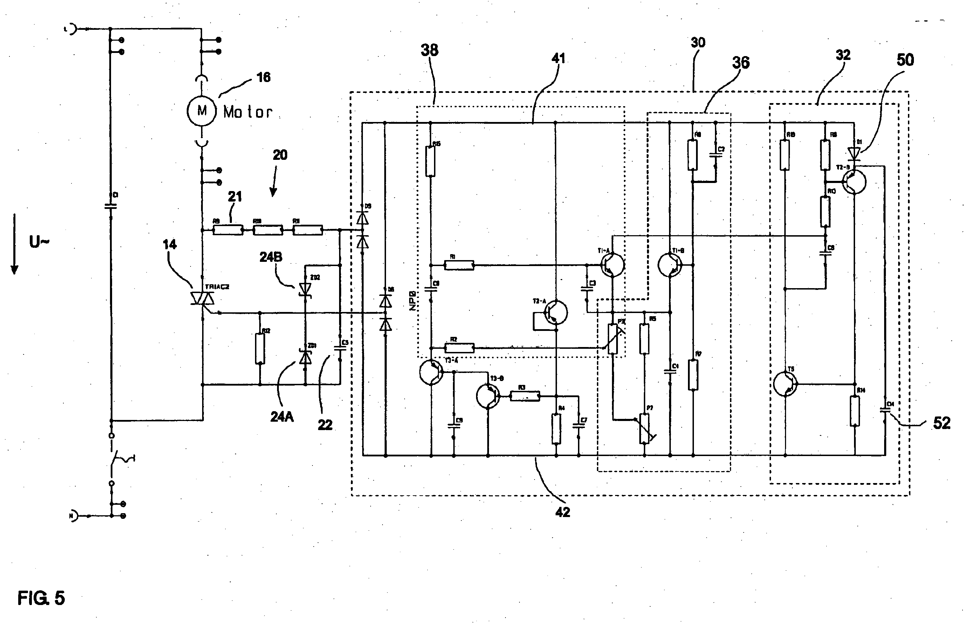

- Fig. 5: ein Schaltbild einer erfindungsgemäßen Vorrichtung, die gegenüber der in Fig. 4 gezeigten modifiziert ist.

In Fig. 1 ist eine Vorrichtung zur Leistungssteuerung (nachfolgend kurz Phasenanschnittsteuerung genannt) in Form eines Blockschaltbildes dargestellt und mit dem Bezugszeichen 10 gekennzeichnet. Diese Phasenanschnittsteuerung dient dazu, die einem elektrischen Verbraucher, wie beispielsweise einem Motor, insbesondere für Staubsauger, zugeführte Leistung durch Phasenanschnitt der Wechselspannung zu steuern. Grundsätzlich sind solche Phasenanschnittsteuerungen bekannt, so dass auf deren genaue Funktionsweise an dieser Stelle nicht weiter eingegangen werden muss.

Die Phasenanschnittsteuerung 10 umfasst ein Schaltungselement 12, das in dieser Ausführungsform als TRIAC 14 ausgebildet ist. Der TRIAC 14 liegt in Reihe mit dem zu versorgenden elektrischen Verbraucher 16, hier einem Universalmotor. Diese Reihenschaltung aus TRIAC 14 und Motor 16 ist an einer Wechselspannungsversorgung angeschlossen. Üblicherweise liegt die Wechselspannung bei 230 V und 50 Hz.

Parallel zu dem TRIAC 14 ist eine Reihenschaltung aus einem Widerstand 20 und einem Kondensator 22 angeordnet. Der Widerstand 20 setzt sich im vorliegenden Ausführungsbeispiel aus drei Einzelwiderständen 21 zusammen. Diese Einzelwiderstände 21 können als sogenannte SMD-Widerstände 21 mit 0,25 W Leistung ausgebildet sein. Selbstverständlich kann die Anzahl dieser Einzelwiderstände 21 variieren und weniger oder auch mehr als die gezeigte Anzahl umfassen.

Der Kondensator 22 dient als sogenannter Zündkondensator, an dem eine Spannung U_{Z} anliegt.

Parallel zu dem Zündkondensator 22 liegt eine Reihenschaltung aus zwei Zener-Dioden 24A und 24B, die gegenpolig verschaltet sind. Das bedeutet, dass für jede Halbwelle der Versorgungsspannung eine der beiden Zener-Dioden in Stromrichtung liegt. Die Zener-Dioden 24A, 24B dienen dazu, die am Zündkondensator 22 anliegende Spannung U_{z} auf einen vorgegebenen Wert, vorzugsweise 22 V, zu begrenzen.

Zwischen dem Widerstand 20 und dem Zündkondensator 22 ist eine DIAC-Ersatzschaltung angeschlossen, die eine Verbindung zum Steuereingang (Gate) 25 des TRIACS 14 herstellt.

Schließlich ist noch ein Widerstand 27 vorgesehen, der zwischen Gate 25 und Drain 28 des TRIACS 14 liegt.

Bei der DIAC-Ersatzschaltung 30 handelt es sich um eine Baugruppe, die als Blockschaltdiagramm in Fig. 2A gezeigt ist und im Wesentlichen dazu dient, der TRIAC 14 zu einem vorgegebenen Zeitpunkt zu zünden, d.h. in den leitenden Zustand zu versetzen, so dass der Motor 16 mit Energie versorgt wird. Bei bisherigen Phasenanschnittsteuerungen hat diese Funktion ein sogenanntes DIAC ausgeführt.

Die DIAC-Ersatzschaltung 30 weist mehrere funktionale Gruppen auf, von denen in Fig. 2A drei dargestellt sind.

Zum einen enthält die DIAC-Ersatzschaltung 30 ein Schaltelement 32, das eine Verbindung zwischen den beiden Anschlusspunkten 34 herstellen kann. Bei geschlossenem Schaltelement 32 ist folglich der Zündkondensator 22 mit dem Gate 25 des TRIACS 14 verbunden.

Die DIAC-Ersatzschaltung 30 weist ferner eine Freigabeschaltung 36 auf, der die am Anschlusspunkt 34 und damit die am Zündkondensator 22 anliegende Spannung U_{z} zugeführt ist. Diese Spannung wird überwacht und nach Erreichen einer Referenzspannung U_{Ref} wird ein Freigabesignal erzeugt. Statt dem Vergleich mit einer Referenzspannung kann das Freigabesignal auch dann erzeugt werden, wenn die Spannung am Zündkondensator nicht mehr ansteigt.

Schließlich ist noch ein Zeitglied 38 vorgesehen, das das Schaltelement 32 nach Ablauf bestimmter einstellbarer Zeitperioden ein- und wieder ausschalten kann. Die Zeitperiode Δt ist über ein Stellelement 39 einstellbar. Mit Hilfe dieses Stellelements 39 kann der sogenannte Phasenwinkel der Phasenanschnittsteuerung 10 eingestellt werden. Das Zeitglied 38 ist zusätzlich mit einer Sanftanlaufschaltung 35 verbunden, die in der Startphase den Phasenwinkel langsam zu dem eingestellten Phasenwinkel verändert.

Der Aufbau des Zeitglieds 38 ist in Fig. 2B dargestellt. Es umfasst einen Rampengenerator 51, der mit Beginn jeder Halbwelle der Versorgungsspannung eine rampenförmige Spannung erzeugt. Bevorzugt ist die Steigung der Rampe fest.

Die Rampenspannung wird einem Vergleicher 53 zugeführt, der sie mit einem Schwellenwert vergleicht. Der Schwellenwert wird über das Stellelement 39 eingestellt.

Sobald die Rampenspannung den Schwellenwert erreicht, wird ein Signal erzeugt, das das Schaltelement 32 aktiviert.

Der Vergleicher 53 weist noch einen Freigabe/Sperr-Eingang auf, der mit dem Ausgang der Freigabschaltung 36 verbunden ist. Dadurch ist es möglich, den Vergleicher 53 erst zu einem bestimmten Zeitpunkt freizugeben, um auf diese Weise bspw. Frühzündungen zu vermeiden.

Mit Bezug auf die Fig. 3 soll nachfolgend die Funktion der Phasenanschnittsteuerung 10, und insbesondere der DIAC-Ersatzschaltung 30 erläutert werden.

Zu Beginn einer jeden Halbwelle der Versorgungsspannung wird der Zündkondensator 22 über den Widerstand 20 aufgeladen. Dabei steigt die Spannung U_{Z} kontinuierlich an bis zum Zeitpunkt t1, bei dem die Zener-Spannung der parallelen Zener-Diode 24A bzw. 24B erreicht ist. Bevorzugt beträgt diese Spannung 22 V. Obgleich die Versorgungsspannung weiter ansteigt, bleibt die Spannung U_{z} bedingt durch die Zener-Dioden konstant auf 22 V.

In der DIAC-Ersatzschaltung wird durch die Freigabeschaltung 36 die Spannung U_{z} mit einem Referenzwert, nämlich ebenfalls bevorzugt 22 V, verglichen und bei Erreichen der 22 V ein Freigabesignal erzeugt. Dieses Freigabesignal wird dem Vergleicher 53 zugeführt und gibt diesen zum Zeitpunkt t1 frei.

An dem Vergleicher 53 liegt einerseits eine einstellbare Schwellenwertspannung an und andererseits eine rampenförmige Spannung, die der Rampengenerator 51 zerzeugt. Sobald diese rampenförmige Spannung die Schwellenwertspannung erreicht, erzeugt der Vergleicher 53 ein Steuersignal, mit dem das Schaltelement 32 gesteuert wird.

Mit Bezug auf die Figur 3 bedeutet dies, dass zum Zeitpunkt t1 der Vergleicher freigegeben wird und zum Zeitpunkt t2, also nach Ablauf einer Zeitdauer Δt das Steuersignal erzeugt wird. Das Schaltelement 32 wird folglich zum Zeitpunkt t2 zum Schließen angesteuert.

Nach dem Schließen des Schaltelements 32 liegt der Zündkondensator 22 und damit die Zündspannung U_{z} am Gate 25 des TRIACS 14 und führt aufgrund der gewählten Spannungshöhe zu einem Zünden des TRIACS 14. Über diese Verbindung kann sich der Zündkondensator 22 bis zum Ende der Zündung nahezu vollständig entladen. Bei einer Restspannung U_{z} von ca. 2 V wird das Schaltelement 32 wieder geöffnet, so dass mit der nächsten Halbwelle der Versorgungsspannung der vorgenannte Vorgang erneut ablaufen kann.

Wie allgemein bekannt, wird der TRIAC 14 beim nächsten Nulldurchgang der Versorgungsspannung, also zu Beginn der nächsten Halbwelle sperrend, so dass der Universalmotor 16 letztlich nur im Zeitfenster t2 bis zum Nulldurchgang der Wechselspannung mit Energie versorgt wurde.

Durch Verschieben des Zeitpunkts t2 und damit einem Vergrößern des Zeitabstands zum nächsten Nulldurchgang lässt sich die Leistung verändern. D.h., dass durch Verändern der Zeitperiode Δt die Leistung eingestellt werden kann.

Eine konkrete Ausgestaltung der Phasenanschnittssteuerung 10 und insbesondere der DIAC-Ersatzschaltung 30 ist in Fig. 4 dargestellt, wobei auf die mit gleichen Bezugszeichen wie in Fig. 1, 2A und 2B gekennzeichneten Elemente nicht nochmals neu eingegangen werden soll.

Die DIAC-Ersatzschaltung weist einen aus vier Dioden D5, D6 gebildeten Brückengleichrichter auf, der dafür sorgt, dass innerhalb der DIAC-Ersatzschaltung und damit an den beiden Spannungsseiten 41, 42 für jede Halbwelle der Versorgungsspannung gleiche Polarität herrscht.

Das Schaltelement 32 wird innerhalb der DIAC-Ersatzschaltung von den Transistoren T5 und T2-B, den Widerständen R18, R13, R6, R14 und dem Kondensator C6 gebildet. Der Transistor T5 (NPN-Transistor) liegt in Reihe mit dem Widerstand R18 zwischen den beiden Seiten 41 und 42. Parallel zum Widerstand 18 liegt eine Reihenschaltung aus den Widerständen R6 und R13 sowie dem Kondensator C6. Der Transistor T2-B liegt in Reihe mit einem Widerstand R14 zwischen den beiden Seiten 41, 42. Der Transistor T2-B ist als pnp-Transistor ausgebildet, dessen Basis mit dem Verbindungspunkt der beiden Widerstände R6 und R13 verbunden ist. Der Kollektor des Transistors T2-B ist mit der Basis des Transistors T5 und dem Widerstand R14 verbunden.

Wird über den Widerstand R13 der Transistor T2-B aufgesteuert, erfolgt über den Transistor T5 und, den Kondensator C6 eine dynamische Selbsthaltung. Der Widerstand R18 begrenzt dabei den maximalen Strom. Das Schaltelement 32, d.h. die beiden Transistoren T2-B und T5 schalten erst dann wieder ab, wenn die Spannung auf unter ca. 2 V gefallen ist, also der Zündkondensator 22 fast vollständig entladen ist.

Das Zeitglied 38 besteht im Wesentlichen aus dem Kondensator C8, dem Widerstand R15 und dem npn-Transistor T1-A, der bei einer Aufsteuerung das Schaltelement 32 aktiviert.

Wie in Fig. 4 zu erkennen ist, liegt der Widerstand R15 in Reihe mit dem Kondensator C8 und bildet somit ein RC-Glied. Die Basis des Transistor T1-A ist über einen Widerstand R1 mit dem Mittenabgriff des RC-Glieds R15, C8 verbunden.

Das RC-Glied R15, C8 dient dazu, eine Spannungsrampe an der Basis des Transistors T1-A zu erzeugen, um den Transistor T1-A nach Erreichen eines bestimmten Werts (Schwellenwerts) leitend zu schalten.

Zur Einstellung des Schwellenwerts und damit der Zeitdauer Δt ist eine Stelleinrichtung mit einem Potentiometer P3 vorgesehen, das den Emitter des Transistors T1-A über einen weiteren Potentiometer mit der Seite 42 verbindet. Der Mittenabgriff des Potentiometers P3 ist über einen Widerstand R2 mit dem Kondensator C8 verbunden. Über ein Verstellen des Potentiometers P3 lässt sich damit der Schwellenwert, bei dessen Erreichen geschaltet wird, verändern.

Über einen Spannungsteiler R8 und R7 wird über einen Transistor T1-B eine interne Referenzspannung erzeugt, die als Referenz sowohl für die durch das Potentiometer P3 gebildete Stelleinrichtung als auch für die Rampenerzeugung dient. Parallel zu dem Widerstand R8 ist ein Kondensator C2 vorgesehen, der eine "Frühzündung" unterbindet, indem die Referenzspannung angehoben wird, bis die Spannung am Zündkondensator 22 konstant bleibt. Dieser Schaltungsteil bildet somit die Freigabeschaltung 36.

Schließlich weist die DIAC-Ersatzschaltung eine Sanftanlaufschaltung auf, die über die Transistoren T3-A und T3-B gebildet wird. T3-A wirkt als Stromverstärker und überschreibt die Stellspannung, die durch R2 eine definierte Mindestimpedanz aufweist. Der Kondensator C9 bestimmt den Verlauf des Sanftanlaufs zusammen mit seinem Ladestrom, der durch R3 bestimmt ist. Zum Laden wird die Basis-Emitter-Strecke von T3-B in Sperrrichtung (ca. 6 V) betrieben. Der Transistor T2-A dient als Diode mit kleinem Sperrstrom. Sie lädt den Kondensator C7 periodisch auf ca. 22 V auf. R4 entlädt C7, so dass nach dem Ausbleiben von ca. vier Halbwelle, eine kräftige Entladung des Kondensators C9 über den Transistor T3-B bewirkt wird und damit eine saubere Wiederholung des Sanftanlaufs nach einer Spannungsunterbrechung möglich ist.

Grundsätzlich dient die Sanftanlaufschaltung also dazu, die Zeitdauer Δt, also die Rampenhöhe innerhalb der ersten Halbwellen nach dem Start auf den gewünschten eingestellten Wert zu bringen.

In Fig. 5 ist eine weitere Ausgestaltung der Phasenanschnittsteuerung 10 und insbesondere der DIAC-Ersatzschaltung 30 dargestellt, die im wesentlichen der in Fig. 4 gezeigten entspricht. Auf eine nochmalige Beschreibung der mit gleichen Bezugszeichen gekennzeichneten Bauteile wird deshalb an dieser Stelle verzichtet und auf die vorherige Beschreibung verwiesen.

Der alleinige Unterschied der in Fig. 5 gezeigten Schaltung liegt darin, dass das Schaltelement 32 zwei weitere Bauteile aufweist, nämlich eine Diode D1, die mit dem Bezugszeichen 50 gekennzeichnet ist, und einen Kondensator C14, der mit dem Bezugszeichen 52 gekennzeichnet ist.

Die Diode D1 liegt am Kollektor des Transistors T2-B an und der Kondensator liegt parallel zu dem Kollektor-Emitter-Pfad des Transistors T2-B und dem folgenden Widerstand R14.

Diese Änderung gegenüber der in Fig. 4 gezeigten Schaltung bewirkt eine Linderung der Auswirkungen eines Schalterprellens beim Einschalten. Wenn beim Einschalten der Schalter prellt, kann es zu unerwünschten Zündungen kommen. In der Folge dieser Zündungen können dann große Ströme für die ersten ein, zwei oder drei Halbwellen fließen, die zum Auslösen einer Sicherung führen können, bzw. zu einem schlagartigen Geräusch am Elektromotor.

Mit den zusätzlichen Bauteilen D1 und C14 können diese Wirkungen nahezu eliminiert werden.

Es versteht sich, dass die vorgenannte Ausführungsform einer DIAC-Ersatzschaltung rein beispielhaft gewählt wurde und andere Ausgestaltungen ebenfalls möglich sind. Darüber hinaus versteht sich, dass die DIAC-Ersatzschaltung nicht notwendigerweise eine Sanftanlaufschaltung aufweisen muss.

Die Phasenanschnittssteuerung 10 hat den Vorteil, dass eine geringere einstellbare minimale Spannung als bei früheren Schaltungen möglich ist. Außerdem ist die maximale Spannung um ca. 1 V bis ca. 2 V höher. Die Zeit für den Sanftanlauf kann in weiten Grenzen variiert werden. Schließlich ist die thermische Stabilität der Schaltung wesentlich besser geworden. Sie erreicht eine Abweichung von ca. +/- 5 V bei 70 V Motorspannung von -20°C bis 120°C.

## Patentansprüche

1. Vorrichtung zur Leistungssteuerung von an ein Wechselspannungs-Versorgungsnetz angeschlossenen elektrischen Verbrauchern, mit
- einem in Reihe mit dem Verbraucher liegenden Schaltungselement (12, TRIAC), das einen Steuereingang aufweist;
- einer Zündeinrichtung zur Ansteuerung des Schaltungselements und Ausführung eines Phasenanschnitts, und
- einem Zündkondensator (22), der mit der Zündeinrichtung gekoppelt ist, bis zu einer vorgegebenen Spannung. Zündspannung, aufladbar ist und die zum Aktivieren des Schaltungselements erforderliche Energie liefert,
wobei
die Zündeinrichtung aufweist:
-- ein Schaltelement (32), dass bei dessen Aktivierung eine Verbindung zwischen Zündkondensator und Steuereingang des Schaltungselement herstellt;
-- ein Freigabeelement (36), das die am Zündkondensator anliegende Spannung mit einem Referenzwert vergleicht und bei Erreichen des Referenzwertes ein Freigabesignal erzeugt, wobei der Referenzwert dem Wert der Zündspannung entspricht, und
-- ein Zeitelement (38), das mit dem Freigabeelement verbunden ist und in Antwort auf das Freigabesignal und nach Ablauf einer vorgebbaren Zeitdauer das Schaltelement (32) aktiviert, derart, dass die im Zündkondensator (22) gespeicherte Energie nahezu vollständig zum Zünden des Schaltungselement (12, TRIAC) verwendet wird.

2. Vorrichtung nach Anspruch 1, **dadurch gekennzeichnet, dass** parallel zu dem Zündkondensator (22) ein Spannungsbegrenzungselement (24) vorgesehen ist, um die am Zündkondensator anliegende Spannung auf einen vorgegebenen Maximalwert zu begrenzen.

3. Vorrichtung nach Anspruch 2, **dadurch gekennzeichnet, dass** das Spannungsbegrenzungselement (24) zwei gegenpolig verschaltete Zehnerdioden (24A, 24B) aufweist.

4. Vorrichtung nach einem der vorhergehenden Ansprüche, **dadurch gekennzeichnet, dass** die vorgebbare Zeitdauer die Einschaltdauer (Zündwinkel) des Schaltungselements (12, 14) festlegt.

5. Vorrichtung nach Anspruch 4, **dadurch gekennzeichnet, dass** das Zeitelement ein RC-Glied (51) zur Erzeugung einer rampenförmigen Spannung und einen einstellbaren Widerstand (39) zur Einstellung eines Schwellenwerts aufweist, wobei das Schaltelement (32) aktiviert wird, sobald die rampenförmige Spannung den Schwellenwert erreicht hat.

6. Vorrichtung nach Anspruch 5, **dadurch gekennzeichnet, dass** ein Spannungsvergleicher (53) vorgesehen ist, dem die rampenförmige Spannung und der Schwellenwert zugeführt sind, und der einen Freigabeeingang aufweist, der mit dem Freigabeelement (36) verbunden ist.

7. Vorrichtung nach einem der vorhergehenden Ansprüche, **dadurch gekennzeichnet, dass** die Zündeinrichtung (30) eine Sanftanlaufschaltung aufweist.

8. Vorrichtung nach einem der vorhergehenden Ansprüche, **dadurch gekennzeichnet, dass** der Zündkondensator (22) in Reihe mit zumindest einem Widerstand (20, 21) angeordnet ist, wobei diese Reihenschaltung parallel zu dem Schaltungselement angeordnet und der Widerstand (21) als SMD-Widerstand ausgebildet ist.

9. Vorrichtung nach einem der vorhergehenden Ansprüche, **dadurch gekennzeichnet, dass** das Schaltelement (32) zumindest einen Transistor (T5, T2-B), vorzugsweise zwei Transistoren aufweist.

10. Vorrichtung nach einem der vorhergehenden Ansprüche, **dadurch gekennzeichnet, dass** das Freigabeelement (36) einen Transistor (T1-B) in Reihe mit einem Kondensator (C4), sowie einen parallel zur Reihenschaltung liegenden Spannungsteiler aus einem ersten und einem zweiten Widerstand (R8, R7) aufweist, wobei die Basis des Transistors mit dem Mittenabgriff des Spannungsteilers verbunden ist und parallel zu dem ersten Widerstand (R8) des Spannungsteilers ein Kondensator (C2) angeordnet ist, so dass ein Freigabesignal dann erzeugt wird, wenn die am Spannungsteiler anliegende Spannung den Referenzwert erreicht.

11. Vorrichtung nach einem der vorhergehenden Ansprüche, **dadurch gekennzeichnet, dass** die Zündeinrichtung einen Brücken-Gleichrichter (D5, D6) aufweist.

## Claims

1. An apparatus for controlling the power of electrical loads which are connected to an AC voltage supply system, said apparatus having
- a circuit element (12, TRIAC) which is in series with the load and has a control input;
- a triggering device for driving the circuit element and carrying out phase gating, and
- a triggering capacitor (22) which is coupled to the triggering device, is chargeable to a predefined voltage, triggering voltage, and provides the energy needed to activate the circuit element,
wherein
the triggering device has:
-- a switching element (32) which, when activated, establishes a connection between the triggering capacitor and the control input of the circuit element;
-- an enabling element (36) which compares the voltage applied to the triggering capacitor with a reference value and generates an enable signal upon reaching the reference value, the reference value corresponding to the triggering voltage, and
-- a timing element (38) which is connected to the enabling element and, in response to the enable signal and after a predefinable period of time has elapsed, activates the switching element (32) in such a manner that the energy stored in the triggering capacitor (22) is almost completely used to trigger the circuit element (12, TRIAC).

2. The apparatus as claimed in claim 1, **characterized in that** a voltage limiting element (24) is provided parallel to the triggering capacitor (22) in order to limit the voltage applied to the triggering capacitor to a predefined maximum value.

3. The apparatus as claimed in claim 2, **characterized in that** the voltage limiting element (24) has two zener diodes (24A, 24B) which are oppositely biased.

4. The apparatus as claimed in one of the preceding claims, **characterized in that** the predefinable period of time defines the switched-on duration (triggering angle) of the circuit element (12, 14).

5. The apparatus as claimed in claim 4, **characterized in that** the timing element has an RC element (51) for generating a ramp-shaped voltage and a variable resistor (39) for setting a threshold value, the switching element (32) being activated as soon as the ramp-shaped voltage has reached the threshold value.

6. The apparatus as claimed in claim 5, **characterized in that** provision is made of a voltage comparator (53) which is supplied with the ramp-shaped voltage and the threshold value and has an enabling input which is connected to the enabling element (36).

7. The apparatus as claimed in one of the preceding claims, **characterized in that** the triggering device (30) has a soft start circuit.

8. The apparatus as claimed in one of the preceding claims, **characterized in that** the triggering capacitor (22) is arranged in series with at least one resistor (20, 21), this series circuit being arranged parallel to the circuit element and the resistor (21) being in the form of an SMD resistor.

9. The apparatus as claimed in one of the preceding claims, **characterized in that** the switching element (32) has at least one transistor (T5, T2-B), preferably two transistors.

10. The apparatus as claimed in one of the preceding claims, **characterized in that** the enabling element (36) has a transistor (T1-B) in series with a capacitor (C4) as well as a voltage divider which is parallel to the series circuit and comprises a first and a second resistor (R8, R7), the base of the transistor being connected to the center tap of the voltage divider and a capacitor (C2) being arranged parallel to the first resistor (R8) of the voltage divider, with the result that an enable signal is generated when the voltage applied to the voltage divider reaches the reference value.

11. The apparatus as claimed in one of the preceding claims, **characterized in that** the triggering device has a bridge rectifier (D5, D6).

## Revendications

1. Dispositif de commande de puissance de charges électriques raccordées à un réseau d'alimentation électrique alternatif, comprenant
- un élément de commutation (12, TRIAC) qui se trouve en série avec la charge, lequel présente une entrée de commande ;
- un dispositif d'amorçage pour exciter l'élément de commutation et exécuter une coupe de phase ; et
- un condensateur d'amorçage (22) qui est connecté au dispositif d'amorçage, peut être chargé jusqu'à une tension prédéfinie, la tension d'amorçage, et qui délivre l'énergie nécessaire pour activer l'élément de commutation,
le dispositif d'amorçage présentant :
- un élément de commutation (32) qui, lorsqu'il est activé, établit une liaison entre le condensateur d'amorçage et l'entrée de commande de l'élément de commutation ;
- un élément de libération (36) qui compare la tension présente aux bornes du condensateur d'amorçage avec une valeur de référence et, lorsque la valeur de référence est atteinte, génère un signal de libération, la valeur de référence correspondant à la valeur de la tension d'amorçage, et
- un élément de temporisation (38) qui est relié avec l'élément de libération et qui, en réponse au signal de libération et après écoulement d'une durée pouvant être prédéfinie, active l'élément de commutation (32) de telle sorte que l'énergie accumulée dans le condensateur d'amorçage (22) est presque entièrement utilisée pour l'amorçage de l'élément de commutation (12, TRIAC).

2. Dispositif selon la revendication 1, **caractérisé en ce que** parallèlement au condensateur d'amorçage (22) est prévu un élément limiteur de tension (24) pour limiter la tension présente aux bornes du condensateur d'amorçage à une valeur maximale prédéfinie.

3. Dispositif selon la revendication 2, **caractérisé en ce que** l'élément limiteur de tension (24) présente deux diodes Zener (24A, 24B) branchées en polarité inverse.

4. Dispositif selon l'une des revendications précédentes, **caractérisé en ce que** la durée pouvant être prédéfinie détermine la durée d'activation (angle d'amorçage) de l'élément de commutation (12, 14).

5. Dispositif selon la revendication 4, **caractérisé en ce que** l'élément de temporisation présente un élément RC (51) pour générer une tension en forme de rampe et une résistance réglable (39) pour régler une valeur de seuil, l'élément de commutation (32) étant activé dès que la tension en forme de rampe a atteint la valeur de seuil.

6. Dispositif selon la revendication 5, **caractérisé en ce qu'**il est prévu un comparateur de tension (53) auquel sont acheminées la tension en forme de rampe et la valeur de seuil et lequel présente une entrée de libération qui est reliée avec l'élément de libération (36).

7. Dispositif selon l'une des revendications précédentes, **caractérisé en ce que** le dispositif d'amorçage (30) présente un circuit de démarrage en douceur.

8. Dispositif selon l'une des revendications précédentes, **caractérisé en ce que** le condensateur d'amorçage (22) est disposé en série avec au moins une résistance (20, 21), ce circuit série étant disposé en parallèle avec l'élément de commutation et la résistance (21) étant réalisée sous la forme d'une résistance CMS.

9. Dispositif selon l'une des revendications précédentes, **caractérisé en ce que** l'élément de commutation (32) présente au moins un transistor (T5, T2-B), de préférence deux transistors.

10. Dispositif selon l'une des revendications précédentes, **caractérisé en ce que** l'élément de libération (36) présente un transistor (T1-B) en série avec un condensateur (C4) ainsi qu'un diviseur de tension disposé en parallèle avec le circuit série, composé d'une première et d'une deuxième résistance (R8, R7), le base du transistor étant reliée avec la prise centrale du diviseur de tension et un condensateur (C2) étant disposé en parallèle avec la première résistance (R8) du diviseur de tension, de sorte qu'un signal de libération est généré lorsque la tension appliquée au diviseur de tension atteint la valeur de référence.

11. Dispositif selon l'une des revendications précédentes, **caractérisé en ce que** le dispositif d'amorçage présente un redresseur en pont (D5, D6).
